# EUROPEAN PATENT APPLICATION

(11) **EP 4 467 523 A1**
(43) Date of publication of application: **27.11.2024**
(21) Application number: 23743290.1
(22) Date of filing: 18.01.2023
(51) Int. Cl.: C03C 27/12, B32B 17/00

(54) **INTERLAYER FILM FOR LAMINATED GLASS, AND LAMINATED GLASS**

(30) Priority: 19.01.2022 JP 2022006751
(71) Applicant: SEKISUI CHEMICAL CO., LTD., Osaka-shi Osaka 530-8565 (JP)
(72) Inventor: NOHARA, Atsushi, Koka-shi, Shiga 528-8585 (JP); NAKAYAMA, Kazuhiko, Koka-shi, Shiga 528-8585 (JP); FUJIOKA, Sho, 6045JB Roermond (NL)
(74) Representative: Ter Meer Steinmeister & Partner
(86) International application number: PCT/JP2023/001397
(87) International publication number: WO 2023/140297

(57) **Abstract**

An interlayer film for laminated glass including a first resin layer including a thermoplastic resin and a second resin layer including a thermoplastic resin, wherein, for laminated glass made by adhering two clear glass plates to each other via the interlayer film for laminated glass, a visible light reflectance Rv1 measured on a surface on the first resin layer side is 10% or more and a visible light reflectance (Rv2) measured on a surface on the second resin layer side is 7% or less.

## Description

### Technical Field

The present invention relates to an interlayer film for laminated glass, and laminated glass having an interlayer film for laminated glass.

### Background Art

Laminated glass is widely used for window glass for various conveyances such as automobiles and window glass for buildings and the like because even if laminated glass is subjected to an external impact and broken, pieces of the broken glass rarely scatter and provides safety. As the laminated glass, laminated glass in which an interlayer film for laminated glass including a resin component such as a polyvinyl acetal resin is interposed between a pair of glasses and integrated is widely known.

It is known that for laminated glass, for the purpose of enhancing heat ray blocking ability and designability, metal particles and brighteners such as metallic pigments are blended into interlayer films. For example, Patent Literature 1 discloses an interlayer film for laminated glass including a metal flat-plate particle-containing layer, in which silver flat-plate nanoparticles and the like are used as metal flat-plate particles. Patent Literature 2 discloses an interlayer film for laminated glass, including polyvinyl butyral, a plasticizer, and a metallic pigment. It is indicated that, regarding the interlayer film for laminated glass in Patent Literature 2, a resin composition containing a metallic pigment may further contain a color material such as a pigment or a dye.

Patent Literature 3 discloses an interlayer film for laminated glass, including flat plate-shaped metal particles formed from metal such as silver, and shows that the flat plate-shaped metal particles may be covered with metal oxide.

### Citation List

### Patent Literatures

PTL1: WO 2019/003783
PTL2: WO 2016/028963
PTL3: JP 2014-191224 A

### Summary of Invention

### Technical Problem

In recent years, window glass for automobiles or buildings has been progressively diversified in designs, and, for example, has been sometimes demanded to exhibit a metallic feeling in order to achieve the unity with a metallic body for automobiles. For example, as disclosed in Patent Literatures 1 to 3, use of window glass in which a brightener is blended into an interlayer film is considered for exhibition of a metallic feeling.

The interlayer film containing a brightener can be formed into laminated glass which, when viewed from car exterior side, has high designability with a metallic feeling; however, in that case, reflectance in a surface on car interior side may be higher and see-through properties may be insufficient, and for example, it may be difficult to see an external visual scene, which is a problem.

Accordingly, an object of the present invention is to provide an interlayer film for laminated glass, which not only exhibits a metallic feeling and is increased in aesthetic appearance, but also has good see-through properties.

### Solution to Problem

As a result of diligent studies, the present inventors have found that the object can be achieved by allowing an interlayer film to be multilayer and setting the visible light reflectance measured on each of both surfaces of laminated glass, at a predetermined value, and completed the present invention below. Specifically, the present invention provides the following [1] to [19].
[1] An interlayer film for laminated glass having a first resin layer including a thermoplastic resin and a second resin layer including a thermoplastic resin, wherein,
   for laminated glass made by adhering two clear glass plates to each other via the interlayer film for laminated glass, a visible light reflectance (Rv1) measured on a surface on the first resin layer side is 10% or more and a visible light reflectance (Rv2) measured on a surface on the second resin layer side is 7% or less.
[2] The interlayer film for laminated glass according to the above [1], wherein the first resin layer includes a brightener.
[3] The interlayer film for laminated glass according to the above [2], wherein the brightener includes two or more metal oxides.
[4] The interlayer film for laminated glass according to the above [3], wherein the metal oxide includes titanium oxide and silicon oxide.
[5] The interlayer film for laminated glass according to the above [4], wherein the two or more metal oxides have refractive indexes different from each other.
[6] The interlayer film for laminated glass according to any one of the above [2] to [5], wherein the brightener has a multilayer structure.
[7] The interlayer film for laminated glass according to any one of the above [2] to [6], wherein the brightener has a three-layer structure and also has a flat plate shape.
[8] The interlayer film for laminated glass according to the above [7], wherein the brightener includes a medium layer and covering layers provided on both surfaces of the medium layer.
[9] The interlayer film for laminated glass according to the above [8], wherein a refractive index of a metal oxide forming the covering layers is higher than a refractive index of the medium layer.
[10] The interlayer film for laminated glass according to any one of the above [2] to [9], wherein an aspect ratio of the brightener is 2 or more and 30 or less.
[11] The interlayer film for laminated glass according to any one of the above [2] to [10], wherein a content of the brightener in the first resin layer is 0.01% by mass or more and 0.5% by mass or less.
[12] The interlayer film for laminated glass according to any one of the above [1] to [11], wherein the second resin layer includes a colorant.
[13] The interlayer film for laminated glass according to the above [12], wherein a content of the colorant in the second resin layer is 0.0001 % by mass or more and 0.1% by mass or less.
[14] The interlayer film for laminated glass according to the above [12] or [13], wherein the colorant is at least one selected from the group consisting of carbon black and a phthalocyanine derivative.
[15] The interlayer film for laminated glass according to any one of the above [1] to [14], wherein a thickness ratio between the first resin layer and the second resin layer is 10: 1 to 1:50.
[16] The interlayer film for laminated glass according to any one of the above [1] to [15], wherein the interlayer film for laminated glass contains a resin layer other than the first resin layer and the second resin layer.
[17] The interlayer film for laminated glass according to the above [16], wherein the resin layer other than the first resin layer and the second resin layer is a polyethylene terephthalate film.
[18] A laminated glass including a first laminated glass member, a second laminated glass member, and the interlayer film for laminated glass according to any one of the above [1] to [17], wherein
   the interlayer film for laminated glass is disposed between the first laminated glass member and the second laminated glass member.
[19] A laminated glass including a first laminated glass member, a second laminated glass member, and an interlayer film for laminated glass, wherein
   the interlayer film for laminated glass is disposed between the first laminated glass member and the second laminated glass member,
   the interlayer film for laminated glass has a first resin layer including a thermoplastic resin and a second resin layer including a thermoplastic resin, and
   a visible light reflectance (Rv1) measured on a surface on the first resin layer side of the laminated glass is 10% or more and a visible light reflectance (Rv2) measured on a surface on the second resin layer side of the laminated glass is 7% or less.

### Advantageous Effects of Invention

According to the present invention, it is possible to provide an interlayer film for laminated glass, which not only exhibits a metallic feeling and is increased in designability, but also has good see-through properties.

### Brief Description of Drawings

[Fig. 1] Fig. 1 is a schematic cross-sectional view showing a flat plate-shaped brightener having a laminated structure.
[Fig. 2] Fig. 2 is a schematic cross-sectional view showing one example of an interlayer film for laminated glass.

### Description of Embodiments

The present invention will be described in more detail below.

The interlayer film for laminated glass (hereinafter sometimes simply referred to as an "interlayer film") according to the present invention has a first resin layer including a thermoplastic resin and a second resin layer including a thermoplastic resin. In the present invention, for laminated glass made by adhering two clear glass plates to each other via the interlayer film, the visible light reflectance (Rv1) measured on a surface on the first resin layer side is 10% or more and the visible light reflectance (Rv2) measured on a surface on the second resin layer side is 7% or less.

By allowing the interlayer film of the present invention to have the above configuration, a metallic feeling can be exhibited when laminated glass is viewed from the first resin layer side. In this regard, light is less reflected when an opposite side is viewed from the second resin layer side via laminated glass, and therefore see-through properties are good. Therefore, for example, by disposing the first resin layer on an exterior (for example, car exterior in an automobile) side and the second resin layer on an interior (for example, car interior in an automobile) side, not only designability in view from the exterior is enhanced, but also a visual scene of the exterior can be observed at high visibility from the interior.

### (First Resin Layer)

The first resin layer may have a material having brightening properties. The first resin layer includes a thermoplastic resin, and preferably contains a brightener in addition to the thermoplastic resin. By allowing the first resin layer to contain a material having brightening properties, such as a brightener, the visible light reflectance (Rv1) can be increased and a metallic feeling can be exhibited when laminated glass is viewed from the first resin layer side, as described above. The brightener is dispersed in the thermoplastic resin, and retained in the first resin layer by the thermoplastic resin.

### [Brightener]

A filler having brightening properties can be used as the brightener included in the first resin layer. The brightener may include metal such as aluminum, silver, copper, platinum, gold, titanium, nickel, tin, a tin-cobalt alloy, indium, and/or chromium, metal oxide such as titanium oxide, silicon oxide, indium oxide, niobium oxide, zinc oxide, antimony oxide, and/or tungsten oxide, and/or the like.

The brightener may be in the form of metal particles formed from metal, may be in the form of metal oxide particles formed from metal oxide, or may be in the form of metal-metal oxide composite particles formed from metal and metal oxide.

The brightener preferably has a multilayer structure. When the brightener has a multilayer structure, not only the visible light transmittance of the interlayer film is enhanced to make transparency good, but also the visible light reflectance (Rv1) is easily increased. Examples of the brightener having a multilayer structure, in the form of metal-metal oxide composite particles, include particles having a multilayer structure by covering metal particles with metal oxide.

The metal particles and the metal oxide particles may also be composite particles formed from two or more metals or two or more metal oxides, and the composite particles are preferably particles having a multilayer structure. Specifically, the particles may be particles having metal particles composed of at least one metal covered with at least one different metal, or may be particles having metal oxide particles composed of at least one metal oxide covered with at least one different metal oxide.

The brightener may be in the form of composite particles of an inorganic material other than metal or metal oxide, and at least any of metal and metal oxide, and the composite particles are preferably in the form of particles having a multilayer structure. For example, particles having an inorganic material such as mica, for example natural mica or synthetic mica, or glass, covered with metal or metal oxide can be used.

The shape of the brightener may be any shape of a spherical shape, a multangular shape such as a quadrangular prism shape, a polygonal pyramid shape such as a triangular pyramid shape or a quadrangular pyramid shape, a columnar shape, a circular cone shape, an indefinite shape, a needle shape, a fibrous form, a flat plate shape, and the like, and is preferably a flat plate shape. When the brightener has a flat plate shape, the brightener is oriented along with a surface direction of the interlayer film as described later and thus not only a certain amount of the incident visible light is reflected, but also the transparency of the interlayer film is easily increased. In addition, the regular reflection is unlikely to cause light scattering and easily decreases the haze of laminated glass.

The average particle diameter (D50) of the brightener is preferably 1 µm or more and 20 µm or less. By setting the average particle diameter within the above range, not only both transparency and a metallic feeling are made good, but also light scattering in the interlayer film is easily suppressed. The average particle diameter (D50) of the brightener is preferably 3 µm or more and 18 µm or less and more preferably 5 µm or more and 16 µm or less. The average particle diameter (D50) is a value measured with a laser diffraction/scattering type particle size distribution measurement apparatus, and the value (D50) at a cumulative volume of 50% is defined as the average particle diameter.

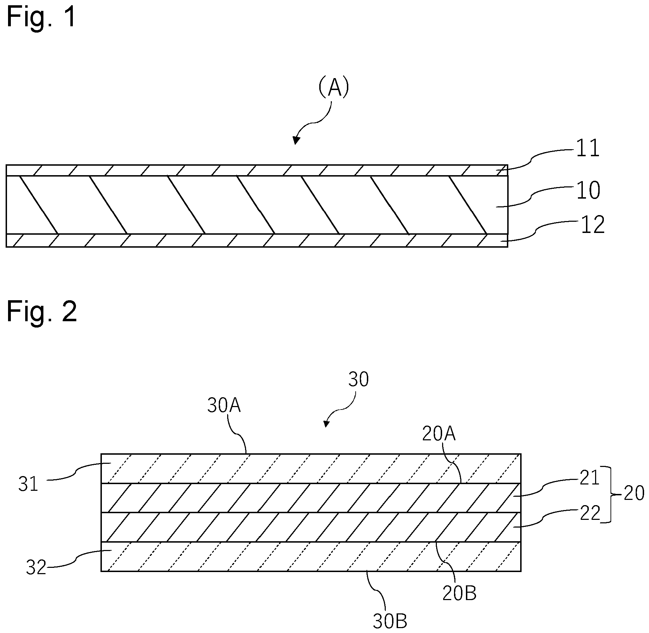

The thickness of the brightener is preferably 0.01 µm or more and 4 µm or less, more preferably 0.1 µm or more and 2 µm or less, and further preferably 0.2 µm or more and 1 µm or less from the viewpoint of suppression of light scattering and both a metallic feeling and transparency being made better. The thickness of the brightener is an average value of values measured by observation of any 50 particles with a scanning electron microscope (SEM) or the like. The thickness of the brightener should be a length in a direction in which the maximum value among lengths in a direction perpendicular to the longitudinal direction of the brightener is the shortest, and the thickness of the flat plate-shaped filler (A) corresponds to a vertical length in Fig. 1.

The aspect ratio of the brightener is preferably 1 or more, more preferably 2 or more and further preferably 4 or more, and preferably 30 or less, more preferably 15 or less and further preferably 5 or less. When the aspect ratio is the above, a certain amount of incident visible light is reflected and also the transparency of the interlayer film is easily increased by orienting the brightener along with the surface direction of the interlayer film as described later. In addition, by setting the aspect ratio at 100 or less, the average particle diameter (D50) of the brightener can be prevented from being larger than necessary. The aspect ratio of the brightener is here the ratio of the length of a major axis to the length of a minor axis of the filler (A) observed with a scanning electron microscope. The major axis and the minor axis are respectively a major axis and a minor axis of the filler (A) in a plan view along with the thickness direction, and in the case of a flat plate-shaped filler, respectively correspond to a longitudinal direction and a direction perpendicular to the longitudinal direction, in the surface direction of the filler.

The brightener is preferably a filler including two or more metal oxides, and is more preferably in the form of metal oxide particles having a multilayer structure of metal oxides. Here, the multilayer structure should be formed of layers formed by different metal oxides. When the brightener has a multilayer structure of metal oxides, not only reflectance is decreased, but also light absorbability is decreased and transmittance is increased. Therefore, the interlayer film not only is increased in transparency, but also easily exhibits a metallic feeling. When the brightener has a multilayer structure of metal oxides, not only coloring can be imparted to reflected light, but also light which penetrates through the interlayer film almost cannot be tinted and can also have an achromatic color or a color close to an achromatic color.

The two or more metal oxides should have different refractive indexes from each other. Thanks to the metal oxides having different refractive indexes from each other, layers having different refractive indexes are formed, and thereby reflection between the layers is generated and a proper metallic feeling is easily ensured. The layers formed from such metal oxides having different refractive indexes from each other should be adjacent in the brightener.

The refractive index difference between metal oxides having different refractive indexes from each other is preferably 0.1 or more and 1.2 or less from the viewpoint of making transparency and a metallic feeling good. The refractive index difference is more preferably 0.3 or more and 1.1 or less, and further preferably 0.6 or more and 1.05 or less.

The thickness ratio between layers formed by metal oxides different from each other is preferably 1:2 to 1:15 in the brightener having a multilayer structure of metal oxides. By having such a thickness ratio, the brightener easily achieves a metallic feeling. The thickness ratio is more preferably 1:3 to 1:13 and further preferably 1:4 to 1:11. The brighteners can also be controlled in thickness ratio to result in the change in color of reflected light.

The thickness ratio is an average value of values measured by observation of any 50 particles with a scanning electron microscope (SEM) or the like.

The two or more metal oxides may be each appropriately selected from the group consisting of the above metal oxides, and in particular, titanium oxide and silicon oxide are preferred. The titanium oxide is titanium dioxide (TiO₂), and may be of rutile type, anatase type, or brookite type. The silicon oxide is silicon dioxide (SiO₂).

The brightener more preferably contains both titanium oxide and silicon oxide, and further preferably has a multilayer structure of a titanium oxide layer and a silicon oxide layer.

When a flat plate-shaped brightener has the above multilayer structure, a plurality of layers is preferably provided along with a thickness direction, and preferably 2 to 5 layers, more preferably 2 to 4 layers, further preferably 3 layers are provided along with the thickness direction.

Fig. 1 shows a specific example of a metal oxide particle of a three-layer structure. When the brightener has a three-layer structure, the brightener (A) should include a medium layer 10 and covering layers 11 and 12 provided on both surfaces of the medium layer 10 as shown in Fig. 1. In the brightener (A) shown in Fig. 1, the metal oxide forming each of the covering layers 11 and 12 should be different from the metal oxide forming the medium layer 10. The metal oxides forming the covering layers 11 and 12 are preferably the same from each other. The brightener (A) shown in Fig. 1 representatively has a flat plate shape.

The refractive index of the metal oxide forming each of the covering layers 11 and 12 is preferably higher than the refractive index of the medium layer 10. By setting relatively high refractive indexes of the covering layers 11 and 12, light is transmitted with being properly reflected and both the transparency and metallic feeling of the interlayer film are easily made good. In addition, a three-layer structure and higher refractive indexes of the metal oxides of the covering layers 11 and 12 than the refractive index of the medium layer 10 allow incident light from any of both surfaces to be properly reflected, and thus not only transparency can be more effectively ensured, a metallic feeling can be exhibited. Here, the preferred values of the difference between the refractive index of each of the covering layers 11 and 12 and the refractive index of the medium layer 10 are as described above.

The respective thicknesses of the covering layers 11 and 12 are preferably smaller than the thickness of the medium layer 10. Preferred values of a specific thickness ratio (each covering layer : medium layer) are as shown with respect to the thickness ratio between such layers.

In the flat plate-shaped brightener, particularly preferably, the covering layers 11 and 12 are each a titanium oxide layer and the medium layer 10 is a silicon oxide layer. The flat plate-shaped brightener is not limited to the above having a three-layer structure, and may have a two-layer structure, and in that case, one of the covering layers 11 and 12 may be omitted. A multilayer structure of four or more layers may also be adopted.

When the brightener has an orientable anisotropy as in the case of having a flat plate shape, the longitudinal direction thereof is preferably oriented so as to be along with the surface direction of the interlayer film. When the brightener has a flat plate shape, the surface direction thereof is preferably oriented so as to be along with the surface direction of the interlayer film. That is, the flat plate-shaped brightener is preferably oriented so that the thickness direction of the brightener is along with the thickness direction of the interlayer film. The brightener, when has the above orientation, enables light travelling in the interlayer film along with the thickness direction to be not only appropriately reflected, but also partially transmitted, and also enables light scattering occurred by the brightener to be suppressed. Therefore, not only a lower haze and an enhanced transparency are achieved, but also a metallic feeling is easily exhibited.

One brightener may be used singly, or two or more brighteners may be used in combination, in the first resin layer.

The method for producing the brightener is not particularly limited, and, for example, metal oxide particles of a multilayer structure formed from two or more metal oxides should be produced by covering particles formed from metal oxide, with another metal oxide. Alternatively, flat plate-shaped metal oxide particles may also be obtained by, for example, covering a sheet formed from metal oxide, with another metal oxide, and then pulverizing the sheet. The brightener here used may also be a commercial product.

The content of the brightener in the first resin layer is preferably 0.01% by mass or more and 0.5% by mass or less. When the content is 0.01% by mass or more, a proper metallic feeling can be exhibited. By setting the content at 0.5% by mass or less, light is prevented from being more reflected than necessary in the first resin layer, to result in a lower haze and easily allow see-through properties of the laminated glass to be ensured. From these viewpoints, the content of the brightener is more preferably 0.02% by mass or more, further preferably 0.04% by mass or more and still further preferably 0.08% by mass or more, and more preferably 0.4% by mass or less, further preferably 0.3% by mass or less and still further preferably 0.2% by mass or less.

### (Second Resin Layer)

The second resin layer is different in composition from the first resin layer, and contains, for example, a material having light absorbability. By allowing the first and second resin layers to be different in composition from each other and allowing the second resin layer to contain a material having light absorbability, the visible light reflectance (Rv1) can be increased and also the visible light reflectance (Rv2) can be decreased, as described above.

The second resin layer includes a thermoplastic resin, and preferably includes a colorant in addition to the thermoplastic resin. By allowing the second resin layer to contain a colorant, light reflected by the brightener is absorbed in the second resin layer and the light can be prevented from being emitted from the second resin layer side of the interlayer film. Accordingly, the visible light reflectance (Rv2) can be decreased, and an opposite side can be viewed at high visibility, in seeing through from the second resin layer side via laminated glass. In addition, a good metallic feeling is exhibited and designability is easily made good. The colorant is dispersed in the thermoplastic resin, and retained in the second resin layer by the thermoplastic resin.

### [Colorant]

A pigment or a dye to be blended in a conventional interlayer film for laminated glass can be used as the colorant. The colorant is suitably a pigment from the viewpoint of being capable of decreasing the visible light reflectance (Rv2) in a small amount of blending.

Examples of the pigment include phthalocyanine, anthraquinone, perylene, azo compounds, carbon black, quinacridone, titanium oxide, diketopyrrolopyrrole, thioindigo, Ni complexes, perinone, isoindoline, quinophthalone, threne, dioxazine, pyrrocoline, calcium carbonate, and derivatives thereof. Among these, phthalocyanine, a phthalocyanine derivative, anthraquinone, an anthraquinone derivative, perylene, a perylene derivative, and carbon black are preferred because of having high affinity with the thermoplastic resin and being hardly bled out, in particular, at least one selected from the group consisting of carbon black and a phthalocyanine derivative is more preferred, and in particular, carbon black is particularly preferred. By using at least one selected from the group consisting of carbon black and a phthalocyanine derivative, particularly, carbon black, even a small amount of blending thereof can provide a sufficiently low visible light reflectance (Rv2), can provide a muted color tone, easily provides a sense of high quality, and the like, and can much more increase designability. When a phthalocyanine derivative is used as the pigment, a copper phthalocyanine-based pigment is preferably used.

One colorant may be used singly, or two or more colorants may be used in combination, in the second resin layer.

The content of the colorant in the second resin layer is preferably 0.0001% by mass or more and 0.1% by mass or less. When the content is 0.0001% by mass or more, light reflected by the brightener is sufficiently absorbed by the colorant and the visible light reflectance (Rv2) can be appropriately lower. By setting the content at 0.1% by mass or less, light is prevented from being more absorbed than necessary by the colorant, and transparency and see-through properties of laminated glass are also easily ensured. From these viewpoints, the content of the colorant is more preferably 0.001% by mass or more, further preferably 0.005% by mass or more and still further preferably 0.01% by mass or more, and more preferably 0.08% by mass or less, further preferably 0.5% by mass or less and still further preferably 0.035% by mass or less.

### [Thermoplastic Resin]

The first and second resin layers in the present invention each contain a thermoplastic resin as described above. By containing the thermoplastic resin, the first and second resin layers each easily serve the function as an adhesive layer, and the adhesiveness to the laminated glass members, and any other layer constituting the interlayer film is good. The interlayer film may also contain a resin layer (third resin layer) containing a thermoplastic resin, other than the first and second resin layers, as described later.

The thermoplastic resin in each of the resin layers is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. By using these resins, adhesiveness to a laminated glass member is easily ensured.

In particular, a polyvinyl acetal resin, an ethylene-vinyl acetate copolymer resin, an ionomer resin, a polyurethane resin, and a thermoplastic elastomer are preferred.

In the interlayer film of the present invention, one thermoplastic resin may be used singly, or two or more thermoplastic resins may be used in combination. When two or more thermoplastic resins are used in combination, the two or more thermoplastic resins may be contained in one resin layer (first or second resin layer), or different types of thermoplastic resins from each other may be contained in different resin layers (first and second resin layers) respectively, in the interlayer film.

Among of these, at least one selected from the group consisting of a polyvinyl acetal resin and an ethylene-vinyl acetate copolymer resin is preferred, and a polyvinyl acetal resin is more preferred in terms of exhibiting excellent adhesiveness to inorganic glass, particularly when it is used in combination with a plasticizer. Therefore, the resins in the first and second resin layers are also each more preferably at least one selected from the group consisting of a polyvinyl acetal resin and an ethylene-vinyl acetate copolymer resin, further preferably a polyvinyl acetal resin.

The resins constituting the resin layers should be appropriately selected from the resins listed above. The resins constituting the resin layers may be different resins from each other but are preferably the same as each other.

Therefore, the resins constituting the first and second resin layers are each preferably a polyvinyl acetal resin or an ethylene-vinyl acetate copolymer resin, more preferably a polyvinyl acetal resin.

### (Polyvinyl Acetal Resin)

The polyvinyl acetal resin is not particularly limited as long as it is a polyvinyl acetal resin obtained by acetalizing polyvinyl alcohol (PVA) with an aldehyde.

The above aldehyde is not particularly limited, but generally, an aldehyde having 1 to 10 carbon atoms is preferably used. The aldehyde having 1 to 10 carbon atoms is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly, or two or more of these aldehydes may be used in combination.

Among the above, n-butyraldehyde, n-hexylaldehyde, and n-valeraldehyde are preferred, and n-butyraldehyde is more preferred. Therefore, for the polyvinyl acetal resin, a polyvinyl butyral resin is preferred.

Polyvinyl alcohol (PVA) is obtained, for example, by saponifying a polyvinyl ester such as polyvinyl acetate. The degree of saponification of polyvinyl alcohol is generally 70 to 99.9 mol %. One polyvinyl acetal resin may be used singly, or two or more polyvinyl acetal resins may be used in combination.

The average degree of polymerization of PVA is preferably 200 or more, more preferably 500 or more, further preferably 1000 or more, and still further preferably 1500 or more. When the average degree of polymerization is equal to or more than the above lower limits, the penetration resistance of laminated glass increases. The average degree of polymerization of PVA is preferably 5000 or less, more preferably 4000 or less, further preferably 3500 or less, and still further preferably 2500 or less.

The average degree of polymerization of polyvinyl alcohol is obtained by a method in accordance with JIS K6726 "Testing methods for polyvinyl alcohol".

The amount of hydroxyl groups in the polyvinyl acetal resin is preferably 15 mol % or more and preferably 38 mol % or less. By setting the amount of hydroxyl groups at 15 mol % or more, the adhesiveness easily becomes good, and the penetration resistance of laminated glass, and the like are easily made good. By setting the amount of hydroxyl groups at 38 mol % or less, laminated glass is prevented from being too hard. The amount of hydroxyl groups is more preferably 20 mol % or more, further preferably 25 mol % or more, from the viewpoint of adhesiveness to laminated glass members, and the like. The amount of hydroxyl groups is more preferably 35% or less, further preferably 33 mol % or less.

Also when a polyvinyl butyral resin is used as the polyvinyl acetal resin, the amount of hydroxyl groups is 15 mol % or more and preferably 38 mol % or less, and more preferably 20 mol % or more, further preferably 25 mol % or more, and more preferably 35% mol or less, further preferably 33 mol % or less, from the same viewpoints.

The amount of hydroxyl groups in the polyvinyl acetal resin is the value, expressed in percentage, of the mole fraction obtained by dividing the amount of ethylene groups to which hydroxyl groups are bonded, by the amount of all ethylene groups in the main chain. The amount of ethylene groups to which hydroxyl groups are bonded can be measured, for example, in accordance with JIS K6728 "Testing methods for polyvinyl butyral".

The degree of acetalization of the polyvinyl acetal resin is preferably 47 mol % or more and preferably 85 mol % or less. The degree of acetalization is more preferably 55 mol % or more, further preferably 60 mol % or more, and more preferably 80 mol % or less, further preferably 75 mol % or less.

The degree of acetalization means the degree of butyralization when the acetal group is a butyral group, and the polyvinyl acetal resin (A) is a polyvinyl butyral resin.

The degree of acetalization is the value, expressed in percentage, of the mole fraction obtained by subtracting the amount of ethylene groups to which hydroxyl groups are bonded and the amount of ethylene groups to which acetyl groups are bonded from the amount of all ethylene groups in the main chain and dividing the obtained value by the amount of all ethylene groups in the main chain. The degree of acetalization (degree of butyralization) should be calculated, for example, from the results measured by a method in accordance with JIS K6728 "Testing methods for polyvinyl butyral".

The degree of acetylation of the polyvinyl acetal resin is preferably 30 mol % or less, more preferably 20 mol % or less, further preferably 10 mol % or less, and still further preferably 2 mol % or less. When the degree of acetylation is equal to or less than the upper limits, the moisture resistance of the interlayer film and laminated glass increases. The degree of acetylation is not particularly limited but is preferably 0.01 mol % or more, more preferably 0.1 mol % or more.

The degree of acetylation is the value, expressed in percentage, of the mole fraction obtained by dividing the amount of ethylene groups to which acetyl groups are bonded, by the amount of all ethylene groups in the main chain. The amount of ethylene groups to which acetyl groups are bonded can be measured, for example, in accordance with JIS K6728 "Testing methods for polyvinyl butyral".

### (Ethylene-Vinyl Acetate Copolymer Resin)

The ethylene-vinyl acetate copolymer resin may be a non-crosslinked ethylene-vinyl acetate copolymer resin and may be a high temperature crosslinked ethylene-vinyl acetate copolymer resin. As the ethylene-vinyl acetate copolymer resin, an ethylene-vinyl acetate modified product resin such as an ethylene-vinyl acetate copolymer saponified product or a hydrolysate of ethylene-vinyl acetate can also be used.

The ethylene-vinyl acetate copolymer resin preferably has a vinyl acetate content of 10 to 50% by mass, more preferably 20 to 40% by mass, as measured in accordance with JIS K 6730 "Testing methods for ethylene/vinyl acetate copolymer materials" or JIS K 6924-2: 1997. By setting the vinyl acetate content at these lower limit values or more, the adhesiveness to laminated glass members increases, and the penetration resistance of laminated glass easily becomes good. By setting the vinyl acetate content at these upper limit values or less, the breaking strength of the interlayer film increases, and the impact resistance of laminated glass becomes good.

### (Ionomer Resin)

The ionomer resin is not particularly limited, and various ionomer resins can be used. Specific examples include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, transparency, and the like of laminated glass and in terms of excellent adhesiveness to laminated glass members.

As the ethylene-based ionomer, an ionomer of an ethylene-unsaturated carboxylic acid copolymer is preferably used because it is excellent in transparency and toughness. The ethylene-unsaturated carboxylic acid copolymer is a copolymer having at least a constituent unit derived from ethylene and a constituent unit derived from an unsaturated carboxylic acid and may have a constituent unit derived from another monomer.

Examples of the unsaturated carboxylic acid include acrylic acid, methacrylic acid, and maleic acid. Acrylic acid and methacrylic acid are preferred, and methacrylic acid is particularly preferred. Examples of another monomer include an acrylate, a methacrylate, and 1-butene.

The ethylene-unsaturated carboxylic acid copolymer preferably has 75 to 99 mol % of the constituent unit derived from ethylene and preferably has 1 to 25 mol % of the constituent unit derived from the unsaturated carboxylic acid, based on 100 mol % of all constituent units of the copolymer.

The ionomer of the ethylene-unsaturated carboxylic acid copolymer is an ionomer resin obtained by neutralizing or crosslinking at least some of the carboxyl groups of the ethylene-unsaturated carboxylic acid copolymer with metal ions, and the degree of neutralization of the carboxyl groups is usually 1 to 90%, preferably 5 to 85%.

Examples of the ion source for the ionomer resin include alkali metals such as lithium, sodium, potassium, rubidium, and cesium, and polyvalent metals such as magnesium, calcium, and zinc. Sodium and zinc are preferred.

The method for producing the ionomer resin is not particularly limited, and the ionomer resin can be produced by a conventionally known production method. For example, when an ionomer of an ethylene-unsaturated carboxylic acid copolymer is used as the ionomer resin, for example, ethylene and an unsaturated carboxylic acid are subjected to radical copolymerization under high temperature and high pressure to produce an ethylene-unsaturated carboxylic acid copolymer. Then, the ethylene-unsaturated carboxylic acid copolymer is reacted with a metal compound including the ion source, and thus an ionomer of the ethylene-unsaturated carboxylic acid copolymer can be produced.

### (Polyurethane Resin)

Examples of the polyurethane resin include a polyurethane obtained by reacting an isocyanate compound with a diol compound, and a polyurethane obtained by reacting an isocyanate compound, a diol compound, and further a chain extender such as a polyamine. The polyurethane resin may contain a sulfur atom. In that case, part or all of the diol should be selected from the group consisting of a polythiol and a sulfur-containing polyol. The polyurethane resin can make the adhesiveness to organic glass good. Therefore, the polyurethane resin is preferably used when the laminated glass member are organic glass.

### (Thermoplastic Elastomer)

Examples of the thermoplastic elastomer include a styrene-based thermoplastic elastomer and an aliphatic polyolefin. The styrene-based thermoplastic elastomer is not particularly limited, and a known one can be used. The styrene-based thermoplastic elastomer generally has a styrene monomer polymer block that is a hard segment, and a conjugated diene compound polymer block or its hydrogenated block that is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and their hydrogenated products.

The above aliphatic polyolefin may be a saturated aliphatic polyolefin or an unsaturated aliphatic polyolefin. The above aliphatic polyolefin may be a polyolefin including a chain olefin as a monomer, or a polyolefin including a cyclic olefin as a monomer. From the viewpoint of effectively enhancing the storage stability and sound insulation properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

### (Plasticizer)

The interlayer film may further contain a plasticizer. The interlayer film has a plurality of resin layers, as described above, and each resin layer (namely, for example, each of the first and second resin layers) may contain a plasticizer in addition to the thermoplastic resin.

By containing the plasticizer, each resin layer becomes flexible and, as a result, improves the flexibility of laminated glass and also improves the penetration resistance. Further, it is also possible to enhance adhesiveness to a laminated glass member. The plasticizer is particularly effective when contained when a polyvinyl acetal resin is used as the thermoplastic resin. Therefore, each resin layer, for example, the first and second resin layers, more preferably contains a polyvinyl acetal resin and a plasticizer.

Examples of the plasticizer include organic ester plasticizers such as a monobasic organic acid ester and a polybasic organic acid ester, and phosphorus-based plasticizers such as an organic phosphate-based plasticizer and an organic phosphite-based plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphate and an adipate, and a mixed adipate. Examples of the mixed adipate include an adipate made from two or more alcohols selected from the group consisting of an alkyl alcohol having 4 to 9 carbon atoms and a cyclic alcohol having 4 to 9 carbon atoms.

Among the above plasticizers, triethylene glycol-di-2-ethylhexanoate (3GO) is particularly preferably used.

The content of the plasticizer in each resin layer (for example, each of the first and second resin layers) is not particularly limited but is preferably 10 parts by mass or more and 100 parts by mass or less based on 100 parts by mass of the thermoplastic resin. When the content of the plasticizer is 10 parts by mass or more, each resin layer is moderately flexible, and the penetration resistance, the adhesiveness, and the like are good. When the content of the plasticizer is 100 parts by mass or less, the separation of the plasticizer from each resin layer is prevented. The content of the plasticizer in each resin layer is more preferably 20 parts by mass or more, further preferably 30 parts by mass or more and further preferably 35 parts by mass or more, and more preferably 70 parts by mass or less and further preferably 63 parts by mass or less.

In the interlayer film, the resin or the resin and the plasticizer are main components, and in the interlayer film, the total amount of the thermoplastic resin and the plasticizer is usually 70% by mass or more, preferably 80% by mass or more, and further preferably 90% by mass or more and less than 100% by mass based on the total amount of the interlayer film. By setting the total amount at less than 100% by mass, the interlayer film can contain an additive such as the colorant.

Also in each resin layer, the resin or the resin and the plasticizer are main components, and in each resin layer (for example, each of the first and second resin layers), the total amount of the thermoplastic resin and the plasticizer is usually 70% by mass or more, preferably 80% by mass or more, and further preferably 90% by mass or more and less than 100% by mass based on the total amount of each resin layer.

### [Other Additives]

Each resin layer of the present invention may contain other additive(s) than the above, and may contain each additive such as an ultraviolet absorbent, an antioxidant, a light stabilizing agent, an adhesion modifier, a heat shielding agent, a fluorescent brightening agent, and a crystal nucleating agent. The interlayer film of the present invention has one or two or more resin layers as described above, and each resin layer may appropriately contain at least one selected from the group consisting of these additives.

### <Layer Configuration>

The layer configuration of the interlayer film of the present invention will be described in more detail below.

In the present invention, the interlayer film 20 has a first resin layer 21 and a second resin layer 22 as described above, and may have two layers as shown in Fig. 2. The first resin layer 21 and the second resin layer 22 are provided with being laminated in the thickness direction. In the interlayer film 20 composed of two layers, the first resin layer 21 constitutes one surface 20A of the interlayer film (surface on the first resin layer side) and the second resin layer 21 constitutes the other surface 20B of the interlayer film (surface on the second resin layer side), and these layers respectively serve as adhesive surfaces to laminated glass members (first and second laminated glass members 31 and 32) of laminated glass 30. Here, a surface of the first laminated glass member 31 serves as the surface on the first resin layer side (surface 30A) of the laminated glass 30 and a surface of the second laminated glass member 32 serves as the surface on the second resin layer side (surface 30B) of the laminated glass.

Herein, the interlayer film 20 may contain a resin layer (also referred to as "third resin layer") other than the first resin layer 21 and the second resin layer 22. The third resin layer (not shown in drawings) may be disposed between the first resin layer 21 and the second resin layer 22. The third resin layer may be disposed outward of the first resin layer 21, or may be disposed outward of the second resin layer 22. Therefore, the third resin layer may also serve as an adhesive surface to the laminated glass members. Furthermore, when the first resin layer or the second resin layer is provided in the form of a plurality of layers, the third resin layer may also be provided between such first resin layers or such second resin layers, as described later.

A known resin film may be used as the third resin layer, and, for example, a polyester film such as a polyethylene terephthalate (PET) film, a polyolefin film, a polyamide film, a polyimide film, a polycarbonate film, an acrylic resin film, or the like can be used. In particular, any of an acrylic resin film or a PET film is preferably used, and a PET film is more preferred. The acrylic resin used in the acrylic resin film is preferably an acrylic polymer containing a hydroxyl group-containing (meth)acrylate-derived structural unit, and specific examples include polyhydroxypropyl methacrylate (HPMA resin) and polyhydroxyethyl methacrylate (HEMA resin).

The first resin layer 21 may be provided in the form of a plurality of layers. Similarly, the second resin layer 22 may be provided in the form of a plurality of layers. Herein, when the first resin layer 21 is provided in the form of a plurality of layers, all such first resin layers 21 should be disposed on the one surface 20A side of the interlayer film, against all second resin layer(s) 22. When the second resin layer 22 is provided in the form of a plurality of layers, all such second resin layers 22 should be disposed on the other surface 20B side of the interlayer film, against all first resin layer(s) 21. Thus, all first resin layer(s) 21 are provided on the one surface 20A side and all second resin layer(s) 22 are provided on the other surface 20B side, and thus the effects of the present invention can be appropriately exerted even if at least any of the first or second resin layer is provided in the form of a plurality of layers.

The first resin layer need not be provided on the entire region of the interlayer film, and may be provided on a partial region of the interlayer film. In the same manner, the second resin layer need not be provided on the entire region of the interlayer film, and may be provided on a partial region of the interlayer film.

For example, when the interlayer film has a laminated structure in which the third resin layer, the first resin layer, the third resin layer, the second resin layer, and the third resin layer are arranged in the listed order, the first and second resin layers may be provided in a partial region and may not be provided in other regions.

In this case, a region where the first and second resin layers are provided should have a five-layer structure and a region where no first and second resin layers are provided should have a three-layer structure of three third resin layers. When the three third resin layers have the same composition, these layers can be integrated and the boundary thereof cannot be distinguished in some cases, and substantially one resin layer may be formed.

While the interlayer film having a five-layer structure is described as an example in the above description, the first and second resin layers may be provided in only a partial region, as in other laminated structures.

The respective regions where the first and second resin layers are provided are preferably matched, but need not be completely matched, and the region where the first resin layer is provided and the region where the second resin layer is provided should be at least partially overlapped.

The thicknesses of the first and second resin layers may be fixed or changed. For example, as described above, the first and second resin layers provided in a partial region of the interlayer film may each have a cross-sectional shape which has a smaller thickness as it is closer to a region where no first and second resin layers are provided.

The interlayer film may have a cross-sectional rectangular shape and a fixed thickness, but the cross-sectional shape of the interlayer film is not limited to a cross-sectional rectangular shape, and the interlayer film may have, for example, a wedge shape. An interlayer film having a wedge shape has a cross section where one end and the other end opposite to the one end have different thicknesses from each other, and the cross section may have, for example, a trapezoidal shape, but may have a triangular shape. For the wedge-shaped interlayer film, the thickness changes from one end toward other end, but the thickness need not change in all portions, and the interlayer film has a portion where the thickness is fixed and the portion where the thickness changes may be partial.

### [Thickness of Each Layer]

The thickness of the first resin layer is preferably 0.1 mm or more and 2.5 mm or less, more preferably 0.2 mm or more and 2.0 mm or less, and further preferably 0.25 mm or more and 1.5 mm or less. By adjusting the content of the brightener in the first resin layer within the above range and also adjusting the thickness within such a range, the interlayer film easily ensures see-through properties and also easily exhibits a metallic feeling.

The thickness of the second resin layer is preferably 0.1 mm or more and 2.5 mm or less, more preferably 0.2 mm or more and 2.0 mm or less, and further preferably 0.25 mm or more and 1.5 mm or less. By adjusting the content of the colorant in the second resin layer within the above range and also adjusting the thickness within such a range, the interlayer film can properly absorb light reflected in the first resin layer to make see-through properties from the second resin layer side good.

The thickness ratio between the first resin layer and the second resin layer is preferably 10:1 to 1:50. By setting the thickness ratio within the range, not only a metallic feeling is exhibited, but also see-through properties are easily ensured. From these viewpoints, the thickness ratio between the first resin layer and the second resin layer is more preferably 5:1 to 1:25 and further preferably 1:1 to 1:10.

The thickness of the interlayer film is preferably 0.2 mm or more and 2.6 mm or less, more preferably 0.25 mm or more and 2.2 mm or less, and further preferably 0.3 mm or more and 1.75 mm or less.

The first and second resin layers and the interlayer film may be changed in thickness as described above, and in that case, the above-described thicknesses of the first and second resin layers and the thickness of the interlayer film mean the thicknesses of portions where the first and second resin layers or the interlayer film are/is the thickest (thickest portion) in the region where both the layers are present. The thickness of the first resin layer means the total thickness when the first resin layer has two or more layers, and the same applies to the second resin layer.

### [Optical Properties of Interlayer film]

In the interlayer film of the present invention, for laminated glass made by adhering two clear glass plates to each other via the interlayer film, the visible light reflectance (Rv1) measured on a surface on the first resin layer side is 10% or more. When the visible light reflectance (Rv1) is less than 10%, visible light is not sufficiently reflected in the first resin layer and a metallic feeling is difficult to exhibit. The visible light reflectance (Rv1) is preferably 10.5% or more and more preferably 13% or more from the viewpoint of good exhibition of a metallic feeling. The visible light reflectance (Rv1) is preferably 25% or less, more preferably 20% or less, and further preferably 18% or less from the viewpoint that see-through properties and transparency are ensured.

In the interlayer film of the present invention, for laminated glass made by adhering two clear glass plates to each other via the interlayer film, the visible light reflectance (Rv2) measured on a surface on the second resin layer side is 7% or less. When the visible light reflectance (Rv2) is more than 7%, light reflected in the interlayer film is too emitted from a surface on the second resin layer side, of the interlayer film, and see-through properties are deteriorated. In addition, designability may also be deteriorated, for example, a metallic feeling is not sufficiently exhibited in view from the first resin layer side. The visible light reflectance (Rv2) is preferably 6.7% or less, more preferably 6.5% or less, still further preferably 6% or less, still further preferably 5.5% or less, and particularly preferably 5% or less from the viewpoint of making designability and see-through properties good.

As the visible light reflectance (Rv2) becomes lower, it becomes better, and the visible light reflectance should be 0% or more, is preferably equal to or more than a fixed value from the viewpoint of preventing more light than necessary from being absorbed by the second resin layer, and is, for example, 1% or more, preferably 2% or more and more preferably 3% or more.

The difference (Rv1 - Rv2: ΔRv) between the visible light reflectance (Rv1) and the visible light reflectance (Rv2) of the interlayer film should be 3% or more, and is preferably 4% or more, more preferably 5% or more and further preferably 7% or more from the viewpoint of making both designability and see-through properties good. The ΔRv is not particularly limited but should be, for example, 25% or less, and is more preferably 19% or less and further preferably 17% or less.

The visible light reflectance (Rv1) and the visible light reflectance (Rv2) can be measured in accordance with JIS 3106 (2019) using a spectrophotometer.

In the interlayer film of the present invention, for laminated glass made by adhering two clear glass plates to each other via the interlayer film, the haze (Hz2) measured on a surface on the second resin layer side is preferably 16% or less. By setting the haze (Hz2) at 16% or less, laminated glass is easily obtained which is suppressed in light scattering, high in see-through properties and less in cloudiness. The haze (Hz2) is more preferably 10% or less, further preferably 8% or less, and still further preferably 6% or less. As the haze (Hz2) becomes lower, it becomes better from the viewpoint of securement of see-through properties and from the viewpoint of suppression of cloudiness, and the haze should be 0% or more and is preferably 0.5% or more in practical use. The haze can be measured in accordance with JIS K6714.

In the interlayer film of the present invention, for laminated glass made by adhering two clear glass plates to each other via the interlayer film, the visible light transmittance (Tv2) measured on a surface on the second resin layer side is preferably 0.5% or more, more preferably 1% or more, further preferably 5% or more, and still further preferably 10% or more from the viewpoint of see-through properties. As the visible light transmittance (Tv2) becomes higher, it becomes better from the viewpoint transparency, but the light transmittance is, for example, 80% or less, preferably 50% or less and more preferably 30% or less from the viewpoint of allowing a certain amount of visible light to be reflected for exhibition of a sufficient metallic feeling and from the viewpoint of allowing the visible light reflectance (Rv2) to be easily lower by absorption of a certain amount or more of the light reflected in the first resin layer. The visible light transmittance can be measured in accordance with JIS R3212 (2015).

The clear glass plates used in the measurement of the visible light reflectance (Rv1, Rv2), visible light transmittance (Tv2), and haze (Hz2) have a thickness of 2.5 mm and have a visible light transmittance of 90.5% as measured in accordance with JIS R 3106: 1998. For the clear glass plates, a* = -0.6, b* = 0.2, and the haze is 0.2% or less using the CIE standard illuminant D65 and the color matching functions for a field of view of 10° prescribed in JIS Z 8781-1 (2012), JIS Z 8781-2 (2012), and JIS Z 8781-4 (2013). The clear glass plates are also referred to as standard clear glass.

The interlayer film may have a region having no first resin layer or no second resin layer and may be changed in thicknesses of the first and second resin layers, and in that case, the above Rv1, Rv2, Tv2, and Hz2 should be measured in the region where both the first and second resin layers are present and the thickness of the first resin layer is the largest.

### (Method for Producing Interlayer film)

It is recommended that the interlayer film of the present invention be obtained, without any particular limitations, by producing each resin composition for forming each resin layer, forming the obtained resin composition into a resin layer, and laminating a plurality of resin layers to provide a multilayer structure. It is recommended that each resin composition be obtained by mixing with the thermoplastic resin, the brightener or the colorant, the plasticizer, and other additives, blended as needed.

Here, the brightener should be blended in addition to the thermoplastic resin in the first resin layer, and, for example, when a plasticizer is used, the brightener should be blended into the plasticizer, sufficiently dispersed in the plasticizer, and then mixed with the thermoplastic resin, from the viewpoint of enhancing the dispersibility in the resin composition. At this time, a dispersant or the like may be appropriately added to the plasticizer. The colorant should be blended in addition to the thermoplastic resin in the second resin layer, and, for example, when the plasticizer is used, the colorant should be blended into the plasticizer, sufficiently dispersed in the plasticizer, and then mixed with the thermoplastic resin, from the viewpoint of enhancing the dispersibility in the resin composition. At this time, a dispersant or the like may be appropriately added to the plasticizer.

When an additive other than the brightener or the colorant is used, the additive may be blended with and sufficiently dispersed in the plasticizer and then mixed with the thermoplastic resin, depending on the type of the additive.

The interlayer film should be formed by extrusion, compression molding, or the like. A method is preferred for extrusion, in which two or more extruders are provided, a multilayer feed block is attached to the tips of the plurality of extruders, and coextrusion is performed. When a plurality of resin layers is provided, and there are two or more resin layers having the same composition, the two or more resin layers having the same composition may be extruded from one extruder. Further, for the resin layers, the thickness may change along the direction orthogonal to the thickness direction, and in that case, the thickness should be changed, for example, by adjusting the amount of the resin supplied, or the like.

The interlayer film may also be obtained by preparing a plurality of resin layers, disposing the plurality of resin layers between a pair of laminated glass members to obtain a laminated body, and performing thermocompression molding (compression molding) of the laminated body to produce laminated glass and also produce the interlayer film together.

The brightener, when has an orientable anisotropy as in the case of having a flat plate shape, can be oriented so that the longitudinal direction or the surface direction of the brightener is along with the surface direction of the interlayer film (each resin layer) by the above compression molding, extrusion, or the like.

### <Laminated Glass>

The present invention further provides a laminated glass. The laminated glass includes two laminated glass members (first and second laminated glass members), and an interlayer film disposed between these laminated glass members. The two laminated glass members are adhered to each other via the interlayer film. For the interlayer film, one surface is adhered to one laminated glass member, and the other surface is adhered to the other laminated glass member. The configuration of the interlayer film is as described above.

The laminated glass should be produced by disposing the above-described interlayer film between two laminated glass members and integrating these by thermocompression molding or the like. The laminated glass may also be produced by preparing a plurality of resin layers and disposing the plurality of resin layers between a pair of laminated glass members to obtain a laminated body, and integrating these by thermocompression molding or the like of the laminated body.

### (Laminated Glass Member)

Examples of the laminated glass members used in the laminated glass include glass plates, and the glass plates may be any of inorganic glass and organic glass, and are preferably inorganic glass. The inorganic glass is not particularly limited, and examples thereof include clear glass, float plate glass, polished plate glass, figured glass, mesh wire glass, line wire glass, and green glass.

As the organic glass, organic glass referred to as resin glass is generally used. The organic glass is not particularly limited, and examples thereof include organic glass composed of a resin such as a polycarbonate, an acrylic resin, an acrylic copolymer resin, or a polyester.

The two laminated glass members may be composed of the same type of material as each other or may be composed of different materials. For example, it is possible that one is inorganic glass and the other is organic glass, but it is preferred that both the two laminated glass members be inorganic glass or organic glass.

The thickness of each laminated glass member is not particularly limited but are, for example, about 0.1 to 15 mm, preferably 0.5 to 5 mm. The thickness of each laminated glass member may be the same as each other or may be different but are preferably the same.

### [Optical Properties of Laminated Glass]

The laminated glass of the present invention should have the same optical properties as the optical properties described for the interlayer film, from the same viewpoint as described above. Specifically, the visible light reflectance (Rv1) measured on a surface on the first resin layer side of the laminated glass should be 10% or more, and is preferably 10.5% or more and more preferably 13% or more, and preferably 25% or less, more preferably 20% or less, and further preferably 18% or less.

The visible light reflectance (Rv2) measured on a surface on the second resin layer side of the laminated glass should be 7% or less, and is preferably 6.7% or less, more preferably 6.5% or less, still further preferably 6% or less, still further preferably 5.5% or less, and particularly preferably 5% or less. As the visible light reflectance (Rv2) of the laminated glass becomes lower, it becomes better, and the visible light reflectance should be 0% or more and may be, for example, 1% or more, and is preferably 2% or more, and more preferably 3% or more.

The difference (Rv1-Rv2: ΔRv) between the visible light reflectance (Rv1) and the visible light reflectance (Rv2) of the laminated glass should be 3% or more, and is preferably 4% or more, more preferably 5% or more, and further preferably 7% or more. The ΔRv of the laminated glass is not particularly limited but should be, for example, 25% or less, and is more preferably 19% or less and further preferably 17% or less.

The haze (Hz2) measured on a surface on the second resin layer side of the laminated glass of the present invention is preferably 16% or less, more preferably 10% or less, further preferably 8% or less, and still further preferably 6% or less. As the haze (Hz2) of the laminated glass becomes lower, it becomes better, and the haze should be 0% or more and is preferably 0.5% or more in practical use.

The visible light transmittance (Tv2) measured on a surface on the second resin layer side of the laminated glass of the present invention is preferably 0.5% or more, more preferably 1% or more, further preferably 5% or more and still further preferably 10% or more, and for example, 80% or less, preferably 50% or less and more preferably 30% or less.

The laminated glass of the present invention can be used as window glass for various vehicles such as automobiles, conveyances such as aircraft and ships, buildings, and the like but is preferably used as automobile laminated glass. The automobile laminated glass may be any of windshield glass (front glass), side glass, rear glass, and roof glass.

Window glass is commonly used as a member for partitioning the exterior and the interior in each use. The interlayer film is preferably made so that the surface on the first resin layer side is disposed on the exterior side (namely, car exterior side in automobiles) and the surface on the second resin layer side is disposed on the interior side (car exterior side in automobiles).

### Examples

The present invention will be described in more detail by Examples, but the present invention is not limited in any way by these examples.

The measurement methods and the evaluation methods in the present Examples are as follows.

### [Rv1 and Rv2]

The visible light reflectance (Rv1) on a surface on the first resin layer side of the laminated glass and the visible light reflectance (Rv2) on a surface on the second resin layer side of the laminated glass were determined in accordance with JIS 3106 (2019) using a spectrophotometer ("U-4100" manufactured by Hitachi High-Technologies Corporation).

### [Ra*1, Rb*1, Ra*2, and Rb*2]

The spectral reflectance was measured on a surface on the first resin layer side of laminated glass, with a spectrophotometer ("U-4100" manufactured by Hitachi High-Technologies Corporation). The Ra*1 and Rb*1 with a D65 light source in a field of view of 10° were calculated from the spectral reflectance obtained under the measurement conditions of a scan speed of 300 nm/min and a slit width of 8 nm, in accordance with JIS Z 8781 (2009).

The spectral reflectance on a surface on the second resin layer side of the laminated glass was measured under the same measurement conditions, and the Ra*2 and the Rb*2 were calculated in the same manner.

### [Tv1 and Tv2]

The visible light transmittance (Tv1) was determined on a surface on the first resin layer side of the laminated glass and the visible light transmittance (Tv2) was determined on a surface on the second resin layer side of the laminated glass in accordance with JIS R 3212(2015) using a spectrophotometer ("U-4100" manufactured by Hitachi High-Technologies Corporation).

### [Ta*1, Tb*1, Ta*2, and Tb*2]

The spectral transmittance was measured on a surface on the first resin layer side of the laminated glass, with a spectrophotometer ("U-4100" manufactured by Hitachi High-Technologies Corporation). The Ta*1 and Tb*1 with a D65 light source in a field of view of 10° were calculated from the spectral transmittance obtained under the measurement conditions of a scan speed of 300 nm/min and a slit width of 8 nm, in accordance with JIS Z 8781 (2009).

The spectral reflectance on a surface on the second resin layer side of the laminated glass was measured under the same measurement conditions, and the Ta*2 and Tb*2 were calculated in the same manner.

### [Haze]

The haze was measured for obtained laminated glass in accordance with JIS K6714. The haze (Hz1) was measured on a surface on the first resin layer side of the laminated glass and the haze (Hz2) was measured on a surface on the second resin layer side of the laminated glass.

### [Evaluation]

Each laminated glass obtained in Examples and Comparative Examples was evaluated with respect to aesthetic appearance and see-through properties, according to the following evaluation criteria.

### < Aesthetic appearance >

The laminated glass was visually observed on a surface on the first resin layer side, and aesthetic appearance was evaluated according to the following evaluation criteria. In each of Comparative Examples 3 to 6, the laminated glass was observed on any one surface thereof and aesthetic appearance was evaluated.
A: metallic feeling sufficiently observed, and excellent aesthetic appearance.
B: weak metallic feeling, but certain metallic feeling observed, and good aesthetic appearance.
C: almost no metallic feeling observed, and insufficient aesthetic appearance.

### <See-through properties>

An external visual scene was observed through a surface on the second resin layer side via the laminated glass and see-through properties here were evaluated according to the following evaluation criteria. In each of Comparative Examples 3 to 6, an external visual scene was observed through an opposite surface to any one surface described above, of the laminated glass, via the laminated glass, and see-through properties here were evaluated.
A: almost no metallic feeling observed, a sufficiently clear external visual scene, and excellent see-through properties.
B: certain metallic feeling observed, but an external visual scene clear to some extent, and good see-through properties.
C: remarkable metallic feeling and no clear external visual scene, and insufficient see-through properties.

The components used in the Examples and Comparative Examples are as follows.

### (1) Thermoplastic Resin

PVB: polyvinyl butyral resin, degree of acetalization 69 mol %, amount of hydroxyl groups 30 mol %, degree of acetylation 1 mol %, average degree of polymerization of PVA used for synthesis 1700

### (2) Plasticizer

3GO: triethylene glycol di-2-ethylhexanoate

### (3) Brightener

Multilayer filler 1: flat plate shape of three-layer structure shown in Fig. 1, including SiO₂ layer (refractive index 1.46) as medium layer and TiO₂ layers (refractive index 2.49) as covering layers, thickness ratio (each covering layer : medium layer =1:8), D50: 14 µm, thickness 0.5 µm, aspect ratio: 2.8

Multilayer filler 2: flat plate shape of three-layer structure shown in Fig. 1, including SiO₂ layer (refractive index 1.46) as medium layer and TiO₂ layers (refractive index 2.49) as covering layers, thickness ratio (each covering layer : medium layer =1:9), D50: 14 µm, thickness 0.5 µm, aspect ratio: 2.8

### (4) Colorant

Pblack7: Pigment Black 7 (CAS No.1333-86-4), carbon black pigment
PR209: Pigment Red 209 (CAS No.3573-01-1), quinacridone-based pigment, red pigment
PR202: Pigment Red 202 (CAS No.3089-17-6), quinacridone pigment
PY150: Pigment Yellow 150 (CAS No.68511-62-6), nickel complex, azo-based pigment,
PB15-3: Pigment Blue 15-3 (CAS No.147-14-8), copper phthalocyanine-based pigment
PB15-1: Pigment Blue 15-1(CAS No.12239-87-1), copper phthalocyanine-based pigment

### (5) Film

PET film manufactured by Toray Industries, Inc. (trade name: Lumirror R75)

### [Example 1]

### (Making of Interlayer film)

The brightener was mixed with the plasticizer according to blending in Table 1 and dispersed therein, these were loaded together with the polyvinyl butyral resin (PVB) to a coextruder, and kneaded in the coextruder to obtain a resin composition for forming a first resin layer. The colorant was mixed with the plasticizer according to blending in Table 1 and dispersed therein, these were loaded together with the polyvinyl butyral resin (PVB) to the coextruder, and kneaded in the coextruder to obtain a resin composition for forming a second resin layer. The resin compositions were coextruded with the coextruder to obtain an interlayer film including a first resin layer having a thickness of 760 µm and a second resin layer having a thickness of 760 µm. The brightener was oriented in the interlayer film so that the surface direction thereof was along with the surface direction of the interlayer film.

### (Making of Laminated Glass)

Two clear glasses were provided. Each was 100 mm long by 100 mm wide by 2.5 mm thick. As the clear glasses, the standard clear glasses described herein were used. The interlayer film obtained above was sandwiched between the two clear glasses, and temporarily pressure-bonded by a vacuum packing method. The temporarily pressure-bonded laminated body was retained in an autoclave under conditions of a temperature of 140°C and a pressure of 1.2 MPa for 20 minutes, and then mainly pressure-bonded with a temperature drop to 23°C and returning to atmospheric pressure, to obtain laminated glass in which the two clear glasses were adhered by the interlayer film. For the obtained laminated glass, the optical properties were measured and are shown in Table 1 as the properties of the interlayer film and the laminated glass.

### [Examples 2 to 8]

Operations were carried out in the same manner as Example 1 except that the type of the brightener and the amount of the brightener added, and the amount of the colorant added were changed as described in Table 1.

### [Example 9]

Operations were carried out in the same manner as Example 1 except that the type of the brightener and the amount of the brightener added, and the amount of the colorant added were changed as described in Table 1, and a PET film (Lumirror) was sandwiched between the first resin layer and the second resin layer.

### [Comparative Examples 1 and 2]

Operations were carried out in the same manner as Example 1 except that the type of the brightener and the amount of the brightener added were changed as described in Table 2 and no colorant was contained in the second resin layer.

### [Comparative Example 3]

The brightener and the colorant were mixed with the plasticizer according to blending in Table 2 and dispersed therein, these were loaded together with the polyvinyl butyral resin (PVB) to an extruder and kneaded and extruded in the extruder to obtain an interlayer film having a thickness of 760 µm. The interlayer film was an interlayer film including a single-layer resin layer, and the brightener was oriented so that the surface direction thereof was along with the surface direction of the interlayer film.

Thereafter, laminated glass was produced in the same manner as Example 1. For the obtained laminated glass, the optical properties were measured and are shown in Table 2 as the properties of the interlayer film. The evaluation results of the laminated glass obtained are also shown in Table 2.

### [Comparative Examples 4 to 6]

Operations were carried out in the same manner as Comparative Example 3 except that the type of the brightener and the amount of the colorant added were changed as described in Table 2.

### [Comparative Examples 7 to 13]

Operations were carried out in the same manner as Example 1 except that the type of the brightener and the amount of the brightener added and the amount of the colorant added were changed as described in Table 2.

**Table 1**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| First resin layer | Resin | Type | - | PVB | PVB | PVB | PVB | PVB | PVB | PVB | PVB | PVB |
| | | Number of parts | phr | 100 | 100 | 100 | 100 | 100 | 100 | 100 | 100 | 100 |
| | Plasticizer | Type | - | 3GO | 3GO | 3GO | 3GO | 3GO | 3GO | 3GO | 3GO | 3GO |
| | | Number of parts | phr | 40 | 40 | 40 | 40 | 40 | 40 | 40 | 40 | 40 |
| | Brightener | Type | - | Multilayer filler 1 | Multilayer filler 1 | Multilayer filler 1 | Multilayer filler 2 | Multilayer filler 2 | Multilayer filler 2 | Multilayer filler 1 | Multilayer filler 1 | Multilayer filler 2 |
| | | Concentration | wt% | 0.05 | 0.15 | 0.15 | 0.05 | 0.15 | 0.15 | 0.15 | 0.15 | 0.15 |
| | Colorant | Type | - | - | - | - | - | - | - | - | - | - |
| | | Concentration | wt% | - | - | - | - | - | - | - | - | - |
| Second resin layer | Resin | Type | - | PVB | PVB | PVB | PVB | PVB | PVB | PVB | PVB | PVB |
| | | Number of parts | phr | 100 | 100 | 100 | 100 | 100 | 100 | 100 | 100 | 100 |
| | Plasticizer | Type | - | 3GO | 3GO | 3GO | 3GO | 3GO | 3GO | 3GO | 3GO | 3GO |
| | | Number of parts | phr | 40 | 40 | 40 | 40 | 40 | 40 | 40 | 40 | 40 |
| | Colorant | Type | - | Carbon black | Carbon black | Carbon black | Carbon black | Carbon black | Carbon black | PB15-1 | PB15-3 | Carbon black |
| | | Concentration | wt% | 0.025 | 0.025 | 0.05 | 0.025 | 0.025 | 0.05 | 0.05 | 0.05 | 0.05 |
| Interlayer between first resin layer and second resin layer | PET film | - | - | - | - | - | - | - | - | - | - | present |
| Spectroscopic characteristics of surface on first resin layer side | Rv1 | | % | 10.4 | 11.6 | 12.2 | 13.2 | 16.6 | 16.4 | 10.3 | 10.5 | 16.0 |
| | Ra*1 | | - | -5.3 | -10.2 | -10 | 7.8 | 13.6 | 13.5 | -10.8 | -11.2 | 13.2 |
| | Rb*1 | | - | -4.4 | -9.7 | -9.4 | -2.7 | -3.5 | -3.4 | -11.5 | -13.1 | -3.6 |
| | Tvl | | % | 14.9 | 14.0 | 1.8 | 14.6 | 13.7 | 1.3 | 19.9 | 17.0 | 1.1 |
| | Ta*1 | | - | -1.9 | -2.2 | -0.2 | -4.3 | -8.9 | -5.7 | -34.3 | -48.8 | -5.4 |
| | Tb*1 | | - | 3.4 | 3.8 | 5.2 | 3.6 | 4.4 | 3.9 | -45.0 | -36.5 | 3.5 |
| | Hz1 | | % | 2.9 | 5.3 | 6.4 | 3.1 | 6.3 | 7.8 | 6.1 | 5.6 | 8.1 |
| Spectroscopic characteristics of surface on second resin layer side | Rv2 | | % | 5.1 | 4.9 | 5 | 5.3 | 5.2 | 4.7 | 6.2 | 6.4 | 4.6 |
| | Ra*2 | | - | -0.9 | -0.6 | -0.4 | 0.6 | 0.6 | 0 | -11.3 | -12.7 | -0.2 |
| | Rb*2 | | - | -1.3 | -0.9 | -0.8 | -0.9 | -0.8 | -0.8 | -16.7 | -19.6 | -0.9 |
| | Tv2 | | % | 15.6 | 13.9 | 1.6 | 14.6 | 13.6 | 1.3 | 20.0 | 16.9 | 1.2 |
| | Ta*2 | | - | -2 | -2.3 | -0.8 | -4.3 | -8.9 | -5.7 | -34.4 | -48.6 | -5.5 |
| | Tb*2 | | - | 3.3 | 4.2 | 5.1 | 3.6 | 4.4 | 3.9 | -45.2 | -36.7 | 3.8 |
| | Hz2 | | % | 3 | 5.2 | 6.1 | 3.1 | 5.9 | 7.9 | 6.0 | 5.6 | 8.1 |
| Difference in spectroscopic characteristic | ΔRv | | % | 5.3 | 6.7 | 7.2 | 7.9 | 11.4 | 11.7 | 4.1 | 4.1 | 11.4 |
| | ΔRa* | | - | -4.4 | -9.6 | -9.6 | 7.2 | 13.0 | 13.5 | 0.5 | 1.5 | 13.4 |
| | ΔRb* | | - | -3.1 | -8.8 | -8.6 | -1.8 | -2.7 | -2.6 | 5.2 | 6.6 | -2.7 |
| | ΔTv | | % | -0.7 | 0.1 | 0.2 | 0.0 | 0.1 | 0.0 | -0.1 | 0.1 | -0.1 |
| | ΔTa* | | - | 0.1 | 0.1 | 0.6 | 0.0 | 0.0 | 0.0 | 0.1 | -0.1 | 0.1 |
| | ΔTb* | | - | 0.1 | -0.4 | 0.1 | 0.0 | 0.0 | 0.0 | 0.2 | 0.2 | -0.3 |
| | ΔHz | | % | -0.1 | 0.1 | 0.3 | 0.0 | 0.4 | -0.1 | 0.1 | 0.0 | 0.0 |
| Evaluation | Aesthetic appearance | | - | A | A | A | A | A | A | A | A | A |
| | See-through properties | | - | A | A | A | A | A | A | A | A | A |

**Table 2**

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|---|---|---|
| First resin layer | Resin | Type | - | PVB | PVB | PVB | PVB | PVB | PVB | PVB | PVB | PVB | PVB | PVB | PVB | PVB |
| | | Number of parts | phr | 100 | 100 | 100 | 100 | 100 | 100 | 100 | 100 | 100 | 100 | 100 | 100 | 100 |
| | Plasticizer | Type | - | 3GO | 300 | 3GO | 3GO | 3GO | 3GO | 3GO | 3GO | 3GO | 3GO | 3GO | 3GO | 3GO |
| | | Number of parts | phr | 40 | 40 | 40 | 40 | 40 | 40 | 40 | 40 | 40 | 40 | 40 | 40 | 40 |
| | Brightener | Type | - | Multilayer filler 1 | Multilayer filler 2 | Multilayer filler 1 | Multilayer filler 1 | Multilayer filler 2 | Multilayer filler 2 | Multilayer filler 1 | Multilayer filler 1 | Multilayer filler 1 | Multilayer filler 1 | Multilayer filler 1 | Multilayer filler 1 | Multilayer filler 1 |
| | | Concentration | wt% | 0.15 | 0.15 | 0.15 | 0.15 | 0.15 | 0.15 | 0.15 | 0.15 | 0.15 | 0.15 | 0.15 | 0.15 | 0.15 |
| | Colorant | Type | - | - | - | Carbon black | Carbon black | Carbon black | Carbon black | - | - | - | - | - | - | - |
| | | Concentration | wt% | - | - | 0.025 | 0.05 | 0.025 | 0.05 | - | - | - | - | - | - | - |
| Second resin layer | Resin | Type | - | PVB | PVB | - | - | - | - | PVB | PVB | PVB | PVB | PVB | PVB | PVB |
| | | Number of parts | phr | 100 | 100 | - | - | - | - | 100 | 100 | 100 | 100 | 100 | 100 | 100 |
| | Plasticizer | Type | - | 3GO | 3GO | - | - | - | - | 3GO | 3GO | 3GO | 3GO | 3GO | 3GO | 3GO |
| | | Number of parts | phr | 40 | 40 | - | - | - | - | 40 | 40 | 40 | 40 | 40 | 40 | 40 |
| | Colorant | Type | - | - | - | - | - | - | - | PB15-3 | PY150 | PY150 | PR202 | PR209 | PR209 | PR209 |
| | | Concentration | wt% | - | - | - | - | - | - | 0.0094 | 0.008 | 0.021 | 0.015 | 0.021 | 0.05 | 0.07 |
| Interlayer between first resin layer and second resin layer | PET film | - | - | - | - | - | - | - | - | - | - | - | - | - | - | - |
| Spectroscopic characteristics of surface on first resin layer side | Rv1 | | % | 13.3 | 18.6 | 9.8 | 8.8 | 16.6 | 15.4 | 11.2 | 13.6 | 13.2 | 12.5 | 12.6 | 11.8 | 11.2 |
| | Ra*1 | | - | 45.1 | 11.1 | -10.1 | -9.7 | 13.6 | 12.1 | -12.0 | -11.0 | -17.1 | -7.7 | -5.5 | -9.3 | -12.0 |
| | Rb*1 | | - | -8.7 | -3.0 | -9.7 | -9.3 | -3.5 | -2.4 | -10.6 | -4.0 | 19.6 | -9.4 | -8.3 | -9.6 | -10.6 |
| | Tv1 | | % | 77.7 | 71.9 | 14.4 | 1.4 | 13.7 | 1.4 | 48.3 | 77.9 | 76.8 | 64.2 | 63.4 | 53.6 | 46.8 |
| | Ta*1 | | - | 2.4 | -7.4 | -2.3 | -1.9 | -8.9 | -6.5 | -22.3 | -5.4 | -10.8 | 8.8 | 27.2 | 44.8 | 56.9 |
| | Tb*1 | | - | 4.7 | 4.6 | 3.8 | 2.5 | 4.4 | 3.8 | -12.4 | 31.1 | 58.7 | -2.8 | 0.4 | 0.0 | -0.3 |
| | Hz1 | | % | 4.7 | 5.8 | 5.3 | 6.3 | 6.4 | 7.2 | 4.6 | 4.0 | 4.3 | 4.9 | 4.3 | 4.3 | 4.3 |
| Spectroscopic characteristics of surface on second resin layer side | Rv2 | | % | 13.2 | 18.4 | 9.9 | 8.8 | 16.5 | 15.4 | 9.0 | 13.4 | 12.0 | 10.8 | 10.3 | 9.2 | 8.5 |
| | Ra*2 | | - | 45 | 11 | -10 | -9.7 | 13.7 | 12.1 | -17.2 | -16.0 | -4.1 | -2.4 | 10.1 | 15.1 | 18.6 |
| | Rb*2 | | - | -8.7 | -2.9 | -9.8 | -9.3 | -3.6 | -2.4 | -14.3 | 10.8 | -7.7 | -11.0 | -9.0 | -5.8 | -3.6 |
| | Tv2 | | % | 77.7 | 71.9 | 14.4 | 1.4 | 13.8 | 1.4 | 48.3 | 77.7 | 76.6 | 64.3 | 63.4 | 53.6 | 46.8 |
| | Ta*2 | | - | 2.4 | -7.4 | -2.2 | -1.9 | -8.8 | -6.5 | -22.3 | -5.4 | -10.7 | 8.8 | 27.3 | 44.9 | 57.0 |
| | Tb*2 | | - | 4.7 | 4.6 | 3.9 | 2.5 | 4.5 | 3.8 | -12.4 | 31.2 | 58.3 | -2.8 | 0.3 | -0.1 | -0.3 |
| | Hz2 | | % | 4.7 | 5.8 | 5.3 | 6.4 | 6.4 | 7.2 | 4.6 | 4.0 | 4.3 | 4.5 | 4.3 | 4.3 | 4.4 |
| Difference in spectroscopic characteristic | ΔRv | | % | 0.1 | 0.2 | -0.1 | 0.0 | 0.1 | 0.0 | 2.3 | 0.2 | 1.2 | 1.6 | 2.3 | 2.6 | 2.8 |
| | ΔRa* | | - | 0.1 | 0.1 | -0.1 | 0.0 | -0.1 | 0.0 | 5.3 | 5.1 | -13.0 | -5.2 | -15.6 | -24.5 | -30.6 |
| | ΔRb* | | - | 0.0 | -0.1 | 0.1 | 00 | 0.1 | 0.0 | 3.7 | -14.8 | 27.3 | 1.7 | 0.8 | -3.8 | -7.0 |
| | ΔTv | | % | 0.0 | 0.0 | 0.0 | 00 | -0.1 | 0.0 | 0.0 | 0.2 | 0.2 | -0.1 | -0.1 | 0.0 | 0.1 |
| | ΔTa* | | - | 0.0 | 0.0 | -0.1 | 00 | -0.1 | 0.0 | 0.0 | 0.1 | -0.1 | 0.0 | -0.1 | -0.1 | -0.1 |
| | ΔTb* | | - | 0.0 | 0.0 | -0.1 | 00 | -0.1 | 0.0 | 0.0 | -0.1 | 0.4 | 0.0 | 0.1 | 0.1 | 0.1 |
| | ΔHz | | % | 0.0 | 0.0 | 0.0 | -0.1 | 0.0 | 0.0 | 0.0 | 0.0 | 0.0 | 0.4 | 0.0 | 0.0 | 0.0 |
| Evaluation | Aesthetic appearance | | - | C | C | B | B | B | B | C | C | c | C | C | C | C |
| | See-through properties | | - | B | B | C | C | C | C | B | B | B | B | B | B | B |

| | | | | | | | | | | | | | | | | |
|---|---|---|---|---|---|---|---|---|---|---|---|---|---|---|---|---|
| * phr means parts by mass based on 100 parts by mass of PVB. * wt% is the content (% by mass) in the first resin layer or the second resin layer. * difference in each spectroscopic characteristic is the value obtained by subtracting each of the spectroscopic characteristic values on the surface on the second resin layer side from each of the spectroscopic characteristic values on the surface on the first resin layer side. * In each of Comparative Examples 3 to 6, the spectroscopic characteristics measured on any one surface of the laminated glass are defined as the values of spectroscopic characteristics on the first resin layer side, and the spectroscopic characteristics measured on an opposite surface to any one surface described above, of the laminated glass, are defined as the values of spectroscopic characteristics on the second resin layer side. | | | | | | | | | | | | | | | | |

As shown in Table 1, in each of Examples, the interlayer film had a multilayer structure having first and second resin layers, and the visible light reflectance (Rv1) measured on a surface on the first resin layer side of laminated glass was 10% or more and the visible light reflectance Rv2 measured on a surface on the second resin layer side thereof was 7% or less. Accordingly, when the obtained laminated glass was observed on a surface on the first resin layer side thereof, a metallic feeling was seen and aesthetic appearance was good. In addition, when an external visual scene was observed through a surface on the second resin layer side via the laminated glass, the external visual scene could be clearly seen and see-through properties were also good.

On the contrary, in each of Comparative Examples 1 and 2, a multilayer structure having first and second resin layers was adopted, but the visible light reflectance Rv2 measured on a surface on the second resin layer side of the laminated glass was more than 7%. Accordingly, a metallic feeling was weak and aesthetic appearance was insufficient in view from the first resin layer, and when an external visual scene was observed on the second resin layer side via the laminated glass, the external visual scene could not be sufficiently clearly observed.

In each of Comparative Examples 3 to 6, a single-layer structure was adopted and almost the same visible light reflectance was obtained in measurement on both surfaces of the laminated glass, and thus both an increase in aesthetic appearance and improvements in see-through properties could not be simultaneously achieved.

In each of Comparative Examples 7 to 13, a multilayer structure having first and second resin layers was adopted, but the visible light reflectance Rv2 measured on a surface on the second resin layer side of the laminated glass was more than 7%. Accordingly, a metallic feeling was weak and aesthetic appearance was insufficient in view from the first resin layer, and when an external visual scene was observed on the second resin layer side via the laminated glass, the external visual scene could not be sufficiently clearly observed.

### Reference Signs List

10 medium layer
11, 12 covering layer
20 interlayer film for laminated glass
21 first resin layer
22 second resin layer
30 laminated glass
31 first laminated glass member
32 second laminated glass member

## Claims

1. An interlayer film for laminated glass comprising a first resin layer comprising a thermoplastic resin and a second resin layer comprising a thermoplastic resin,
for laminated glass made by adhering two clear glass plates to each other via the interlayer film for laminated glass, a visible light reflectance (Rv1) measured on a surface on the first resin layer side being 10% or more and a visible light reflectance (Rv2) measured on a surface on the second resin layer side being 7% or less.

2. The interlayer film for laminated glass according to claim 1, wherein the first resin layer comprises a brightener.

3. The interlayer film for laminated glass according to claim 2, wherein the brightener comprises two or more metal oxides.

4. The interlayer film for laminated glass according to claim 3, wherein the two or more metal oxides have refractive indexes different from each other.

5. The interlayer film for laminated glass according to any one of claims 2 to 4, wherein the brightener has a multilayer structure.

6. The interlayer film for laminated glass according to any one of claims 2 to 5, wherein an aspect ratio of the brightener is 2 or more and 30 or less.

7. The interlayer film for laminated glass according to any one of claims 2 to 6, wherein a content of the brightener in the first resin layer is 0.01% by mass or more and 0.5% by mass or less.

8. The interlayer film for laminated glass according to any one of claims 1 to 7, wherein the second resin layer comprises a colorant.

9. The interlayer film for laminated glass according to claim 8, wherein a content of the colorant in the second resin layer is 0.0001% by mass or more and 0.1% by mass or less.

10. The interlayer film for laminated glass according to any one of claims 1 to 9, wherein a thickness ratio between the first resin layer and the second resin layer is 10:1 to 1:50.

11. A laminated glass comprising a first laminated glass member, a second laminated glass member, and the interlayer film for laminated glass according to any one of claims 1 to 10, wherein
the interlayer film for laminated glass is disposed between the first laminated glass member and the second laminated glass member.

12. A laminated glass comprising a first laminated glass member, a second laminated glass member, and an interlayer film for laminated glass,
the interlayer film for laminated glass being disposed between the first laminated glass member and the second laminated glass member,
the interlayer film for laminated glass comprising a first resin layer comprising a thermoplastic resin and a second resin layer comprising a thermoplastic resin,
a visible light reflectance (Rv1) measured on a surface on the first resin layer side of the laminated glass being 10% or more and a visible light reflectance (Rv2) measured on a surface on the second resin layer side of the laminated glass being 7% or less.
